# EUROPEAN PATENT APPLICATION

(11) **EP 1 635 155 A2**
(43) Date of publication of application: **15.03.2006**
(21) Application number: 05108428.3
(22) Date of filing: 14.09.2005
(51) Int. Cl.: G01J 3/28

(54) **Optical device for the on-line measuring of electromagnetic radiation**

(30) Priority: 14.09.2004 IT RM20040433
(71) Applicant: CENTRO SVILUPPO MATERIALI S.p.A., 00129 Roma (IT)
(72) Inventor: CAPODILUPO, Domenico, 00129, Rome (IT); CHIAROTTI, Ugo, 00129, Rome (IT); MOROLI, Valerio, 00129, Rome (IT); RINALDI, Marco, 00129, Rome (IT)
(74) Representative: Leone, Mario

(57) **Abstract**

Optical device for the on-line measuring of electromagnetic radiation, capable of concomitantly metering different radiation, the analysis thereof allowing to determine the localized progress of a production process, for example of steel; in the reaction chamber also at initial phases. This device comprises: means for capturing and focusing electromagnetic radiation emitted by a source; means for distributing said electromagnetic radiation; means for deflecting said electromagnetic radiation; optical filters, each suitable for filtering by frequency said electromagnetic radiation; means for focusing said electromagnetic radiation filtered by frequency; at least one photodetector, suitable for receiving said electromagnetic radiation filtered by frequency.

## Description

### Field of the invention

The present invention refers to an optical device for the on-line metering of electromagnetic radiations, in particular to a device for the real-time metering of the visible, ultraviolet (UV), infrared (IR) radiation, and also of specific infrared radiations for the determining of gaseous species.

### State of the art

Optical devices for the metering of electromagnetic radiations can have extremely varied uses; for example, they can be used in the controlling of the operating parameters of production processes.

The art is aware of several systems for the on-line controlling of production processes, e.g. a scrap melting process in an electric furnace, which meter values of electrical quantities, temperature of cooling panels, compositions of the gases being disposed of, noise and relative luminosity of the electric arc.

Some of these systems are capable of detecting continually, yet their accuracy is often unsatisfactory in terms of adequacy to the actual process conditions occurring inside a production chamber. This does not allow an effective parameter control required for the optimal running of the process.

For example, Italian Patent 1.302.119 discloses a device for the metering of UV-IR radiations inside electric arc furnaces in order to reduce degradation of the refractory lining. However, such an instrumentation typology is less than satisfactory. In fact, in the initial phase of the production process the presence of scrap between the inner wall of the furnace and the sensor shields both radiations, not allowing the correct operation of the metering device and therefore a correct controlling of the process in said step.

Hence, there is a need to make a device for the on-line metering and analysis allowing to overcome the mentioned drawbacks.

### Summary of the Invention

Object of the present invention is to make an optical device for the on-line metering of electromagnetic radiations, capable of concomitantly metering different radiations, the analysis thereof allowing to determine the localized progress of a production process.

The device, subject-matter of the invention, is susceptible of being used as a real-time metering device in order to improve the current controls related to production processes.

The proposed device allows to overcome the drawbacks of the known art by offering an instrument that, by means of the correct dimensioning of all of its components, e.g. filters, diaphragms, lenses, is capable of optimizing the sensitivity and the response dynamics.

The main advantage of the metering device of the invention lies in allowing the real-time determining of all the main steps of the production process.

The present invention aims at attaining the above-highlighted object by making an optical device for the on-line metering of electromagnetic radiations having the features set forth in claim 1.

The dependent claims describe preferred embodiments of the invention.

### Brief description of the Figure

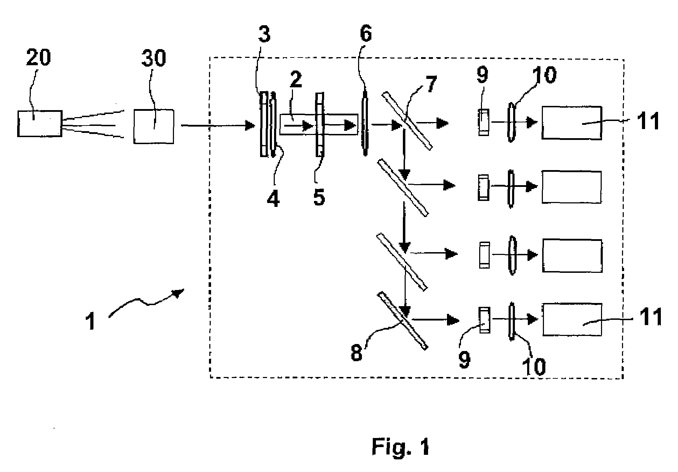

Additional features and advantages of the invention will be evident in the light of the detailed description of preferred, yet not exclusive, embodiments of an optical device for the on-line metering of electromagnetic radiations, illustrated by way of example and without limitative purposes with the aid of the annexed drawing table, wherein
figure 1 shows a schematic view of a device according to the invention.

### Detailed description of preferred embodiments of the invention

Referring to figure 1, it is schematically shown an optical device, generally denoted by reference number 1, for the metering of electromagnetic radiations emitted by an electromagnetic radiation source 20.

Between the electromagnetic radiation source 20 and the optical metering device 1 there is a material 30 under examination, material which may be of gaseous or solid type and is positioned in front of a sensor.

The electromagnetic radiation beam emitted by the source 20 is partially intercepted by the gas or solids under examination and then enters the device 1. The electromagnetic radiation meets a first diaphragm 3, reducing the intensity thereof, and subsequently a first lenses 4 that, by means of a tubular duct 2, focuses the radiation on a second diaphragm 5. The diameter of this second diaphragm 5 defines the dimensions of the emitting surface and assures that all of the electromagnetic radiation entering the device 1 be subjected to metering.

At the end of the tubular duct 2, opposite to the diaphragm 3, a second lens 6 is present, with the task of focusing the electromagnetic radiation in a spot proximal to the location of the subsequent component.

Downstream of the second lens 6 the beam is sent into a portion of the metering device 1 comprising means for selecting the electromagnetic radiation emitted from the source 20. Purpose of said means is to produce at least two fractions of electromagnetic radiations to be directed to as many optical filters. Such optical filters may be selected among the following typologies: interference filters, neutral-density filters, absorption filters, reflection filters, IR filters.

Basically, the device of the invention may be made according to two variants. A first variant, not shown in the figure, uses interference filters mounted on a wheel that, by rotating, alternatively interposes first the one filter and then the other one to the radiation beam. The advantage of this configuration lies in having a single detector and a single set of optical components, something that can facilitate the device setup and improve the metering accuracy.

In a second preferred embodiment, the selecting means comprises instead one or more elements 7 for distributing the beam, forming two beam fractions that can then be filtered and detected separately. The main advantage, unlike the other configuration, lies in detecting the radiation at the two different wavelengths in the same instant. This fact can be fundamental when it is desirable to analyze phenomena changing quite rapidly over time, like for example phenomena rapidly modifying the intensity of the electromagnetic radiation.

Preferably, the beam distributing elements 7 are made of elements of the type distributing electromagnetic radiation.

Therefore, the radiation is split up by said elements 7 into at least two alike beams: one beam sent directly to an optical filter 9 and the other one sent to a second distributing element 7 which in turn splits it up into other two fractions. Downstream of the last distributing element 7, the beam fraction not directly sent to the corresponding filter 9 is aimed to one or more mirrors 8. Such mirrors have the task of deflecting the radiation, so as to reduce the dimensions of the apparatus.

Then, all beam fractions are intercepted by a respective optical filter 9. After having crossed also the optical filters 9, which produce a respective filtered beam, the electromagnetic radiation is finally captured by third and last lenses 10, whose task is to focus each beam filtered by frequency onto the surface of corresponding photodetectors 11.

The photodetectors 11 have the task of detecting the electromagnetic radiation peculiar of the process being analyzed, like for example UV radiation, IR radiation, CO-absorption radiation, CO₂-absorption radiation, CH₄-absorption radiation, etc.

Preferred photodetectors are of the lead selenide (PbSe) type with electronic control of the temperature, of the thermopile type, and of the multiplier phototube type. Purpose of the thermoregulation is to stabilize the temperature of the sensing surface of the detector. Thus, all external disturbance factors are minimized, mainly the temperature changes localized near the detector, and the signal/noise ratio is improved; here for "signal" it is meant the voltage signal produced by the photodetector, which is subsequently amplified by an optional preamplifier (not shown in the figure) and then acquired by a computer. The device of the invention is particularly suitable for the on-line controlling of production processes, like electric furnace melting processes, where the light source 20 is in the inner zone of the electric furnace and is made by the electric arc, the incandescent material being melt, the slag or the refractory.

The optical device for metering may be positioned, for example, onto the end section of a lance, or housed in a suitable cooled unit.

In particular, the metering device described hereto was used for the controlling of the production process of steel in an electric furnace, not merely at the final phase of the process but also at the initial one, since in the initial phase the presence of scrap between the inside of the furnace and the sensor shields the UV-IR radiations commonly in use for these purposes, not allowing an effective controlling of the process by means of the current systems. Advantageously, the device of the invention, through its being capable of monitoring the presence of some chemical species present in front of the sensor, provides a quantitative indication with regard to the progress of the melting front.

The construction features of the proposed device allowed to discriminate the phases of the process, and in particular:
i) the presence of scrap in front of the sensor,
ii) the absence of scrap in front of the sensor, with arc uncovered by the slag,
iii) the absence of scrap in front of the sensor, with arc covered by the slag.

In the first phase i), the sensor is capable of determining in the first instance the progress of the melting front. For the determining of phase i) it is used the IR signal compared to a threshold value below which the scrap completely covers the arc. In this phase the metering performed at the wavelengths peculiar to the analyzed chemical species, for example CO, CO₂, CH₄, provide a key indication with regard to the progress of the melting front.

For the determining of phase ii) the sensor uses the metering of the UV/IR ratio, which should be higher than a threshold value.

For the determining of phase iii) the sensor uses the metering of the UV/IR ratio, which should be lower than a threshold value.

Hence, as metering method there were selected the metering of the UV-IR radiation and the IR absorption spectroscopy, obtained by means of optical filters.

To the abovedescribed optical device for the on-line metering of electromagnetic radiations a person skilled in the art, in order to satisfy further and contingent needs, could effect several further modifications, all however encompassed by the protective scope of the present invention, as defined by the appended claims.

## Claims

1. An optical device (1) for the on-line metering of electromagnetic radiations, comprising:
- means (2, 3, 4, 5, 6) for capturing and focusing electromagnetic radiations emitted by a source (20);
- means (7) for distributing said electromagnetic radiations;
- means for deflecting (8) said electromagnetic radiations;
- optical filters (9), each suitable for filtering by frequency said electromagnetic radiations;
- means (10) for focusing said electromagnetic radiations filtered by frequency;
- at least one photodetector (11), suitable for receiving said electromagnetic radiations filtered by frequency and for producing a voltage signal.

2. The optical device (1) according to claim 1, wherein said means for capturing and focusing electromagnetic radiations comprises a tubular duct (2) having:
- at a first end thereof, a first diaphragm (3) and a first lens (4),
- at a central section thereof, a second diaphragm (5),
- at a second end thereof, a second lens (6).

3. The optical device (1) according to claim 1, wherein said means (7) for distributing the electromagnetic radiations is suitable for distributing said radiations according to two distinct components, generating two fractions of electromagnetic radiations.

4. The optical device (1) according to claim 1, wherein said optical filters (9) are selected among: interference filters, neutral-density filters, absorption filters, reflection filters, IR filters.

5. The optical device (1) according to claim 1, wherein said optical filters (9) are positioned on a wheel so that a rotation of said wheel be such as to alternatively interpose the filters (9) to the fractions of electromagnetic radiations.

6. The optical device (1) according to claim 1, wherein said optical filters (9) are positioned between the distributing means (7) or the deflecting means (8) and the means (10) for focusing said fractions of electromagnetic radiations.

7. The optical device (1) according to claim 1, wherein said means for focusing comprises respective lenses (10), each arranged between each optical filter (9) and the respective photodetector (11), suitable for focusing the different fractions of electromagnetic radiations onto the surfaces of the respective photodetectors (11).

8. The optical device (1) according to claim 7, wherein said photodetectors (11) are of the multiplier phototube type.

9. The optical device (1) according to claim 7, wherein said photodetectors (11) are of the thermopile type.

10. The optical device (1) according to claim 7, wherein said photodetectors (11) are preferably of the lead selenide type with electronic control of the temperature of their surfaces.

11. The optical device (1) according to any one of the preceding claims, wherein it is provided a preamplifier, suitable for optionally amplifying the voltage signal produced by the photodetector (11).
